# EUROPEAN PATENT SPECIFICATION

(11) **EP 2 103 523 B1**
(45) Date of publication and mention of the grant of the patent: **01.08.2012**
(21) Application number: 09155758.7
(22) Date of filing: 20.03.2009
(51) Int. Cl.: B65B 23/14, B65B 35/58, B65G 47/08

(54) **Method and unit for forming groups of rusks or similar products**
Verfahren und Einheit zur Bildung von Gruppen von Zwiebäcken oder ähnlichen Produkten
Procédé et unité de formation de groupes de biscottes ou produits similaires

(30) Priority: 21.03.2008 IT TO20080222
(43) Date of publication of application: 23.09.2009
(73) Proprietor: Felice S.r.l., 28100 Novara (IT)
(72) Inventor: Alotto, Valerio, 10137 Torino (IT)
(74) Representative: Gallarotti, Franco

(56) References cited:
- GB-A- 1 199 812
- GB-A- 1 202 436
- GB-A- 1 298 171
- GB-A- 2 067 510

## Description

The present invention relates to a method and unit for forming groups of rusks or similar products.

In the food industry, and particularly in the packaging of baked products, such as rusks, biscuits, or similar, the products coming out of a baking unit are arranged in a number of parallel lines; groups are formed, each containing Z number of products; and the groups are fed successively to a packaging unit.

The group-forming method used normally comprises feeding the first Z number of products in each line into a respective opening pocket; transferring the pockets, containing the respective groups, simultaneously over a conveyor moving in steps past the pockets; and simultaneously releasing all the groups onto the conveyor by opening the respective pockets.

Though simple and effective, in actual use, the above method has the major drawback of failing to handle the products with care, especially when the above procedure is performed at relatively high speed, and when dealing with highly fragile products. More specifically, when releasing the groups onto the conveyor, the products in each group are subjected to fairly severe impact, often resulting in breakage of one or more products and/or in the group falling apart.

Another drawback of the above method lies in the products in each group being transferred onto the conveyor with the same orientation as the products inserted into the relative pocket. As a result, when, as is often the case, the orientation of the products fed to the packaging machine differs from the orientation of the products deposited onto the conveyor, provision must be made, upstream from the packaging machine and at the output of the group conveyor, for an orienting device, through which the groups are fed successively. In actual use, this is a far from satisfactory solution, on account of the orienting device normally forming a "bottleneck" within the production process, which dictates the output rate of the packaging machine.

It is an object of the present invention to provide a method of forming groups of rusks or similar products, which is cheap and easy to implement and, at the same time, provides for eliminating the above drawbacks.

GB 1 202 436 A discloses a method and an apparatus wherein the leading biscuits of each of a number of side-by-side advancing biscuit columns is engaged by a respective plunger and lifted to a position in which they can be engaged by a horizontally reciprocable member. The latter causes the biscuits to engage a cam surface which rotates the group through 90°. All the groups of four biscuits are then engaged by the pusher of an endless conveyer.

GB 1 199 812 A discloses a device for separating batches of disc-shaped objects. The discharge of a given length of biscuits is controlled by means of a plurality of arms.

GB 1 298 171 A discloses a device for separating off a stack of articles, e.g. biscuits, from a column in a shaft and for transferring the separated stack on to a conveyer.

According to the present invention, there is provided a method of forming groups of rusks or similar products, as claimed in Claim 1 and, preferably, in any one of the Claims depending directly or indirectly on Claim 1.

According to the present invention, there is also provided a unit for forming groups of rusks or similar products, as claimed in Claim 8 and, preferably, in any one of the Claims depending directly or indirectly on Claim 8.

A non-limiting embodiment of the present invention will be described by way of example with reference to the accompanying drawings, in which:
Figure 1 shows a schematic view in perspective of operation of a preferred embodiment of the unit according to the present invention;
Figures 2 to 4 show side views of a detail of the unit according to the present invention in different operating configurations;
Figure 5 shows a larger-scale front view of a detail in Figure 4;
Figure 6 shows a side view of the Figure 2 detail in another two operating configurations;
Figure 7 shows a front view of the Figure 6 detail in two successive operating configurations.

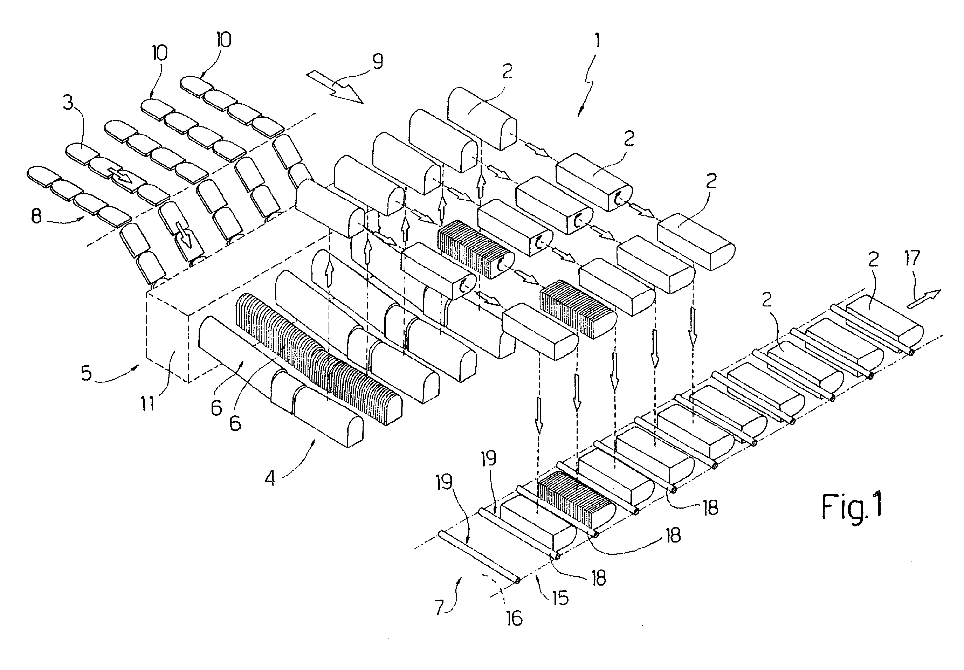

Number 1 in Figure 1 indicates as a whole a unit for forming groups 2 of rusks 3 or similar products.

By way of example, each rusk 3 is substantially parallelepiped-shaped, and is bounded laterally by two flat parallel faces, by a narrow rectangular base, and by two sides connected at one end by the rectangular base, and at the other by a curved surface.

Each group 2 comprises Z number of equioriented rusks 3 arranged in a pack with their respective flat faces contacting.

Unit 1 may obviously operate with rusks 3 shaped differently than described above, provided they can be packed closely together into compact groups 2.

As shown schematically in Figure 1, unit 1 comprises a group-forming station 4 for forming groups 2 and interposed between a feed station 5, which feeds group-forming station 4 with rusks 3 arranged in N number of parallel lines 6, and an output station 7, which receives N groups 2 from group-forming station 4 and feeds groups 2 successively to a known packaging unit (not shown) where each group 2 is packaged and sealed inside a sealed package.

More specifically, feed station 5 comprises an input portion 8 located immediately downstream - in the feed direction 9 of rusks 3 - from a known sorting station (not shown), and which is supplied by the sorting station with N parallel lines 10 of rusks 3, each of which, in respective line 10, is laid flat on a flat face, with its base facing forwards.

Downstream from input portion 8, feed station 5 comprises a known line-up station 11 (indicated schematically in Figure 1 by a dash line) where rusks 3 in each line 10 are upended onto their respective bases and packed closely together into a respective line 6.

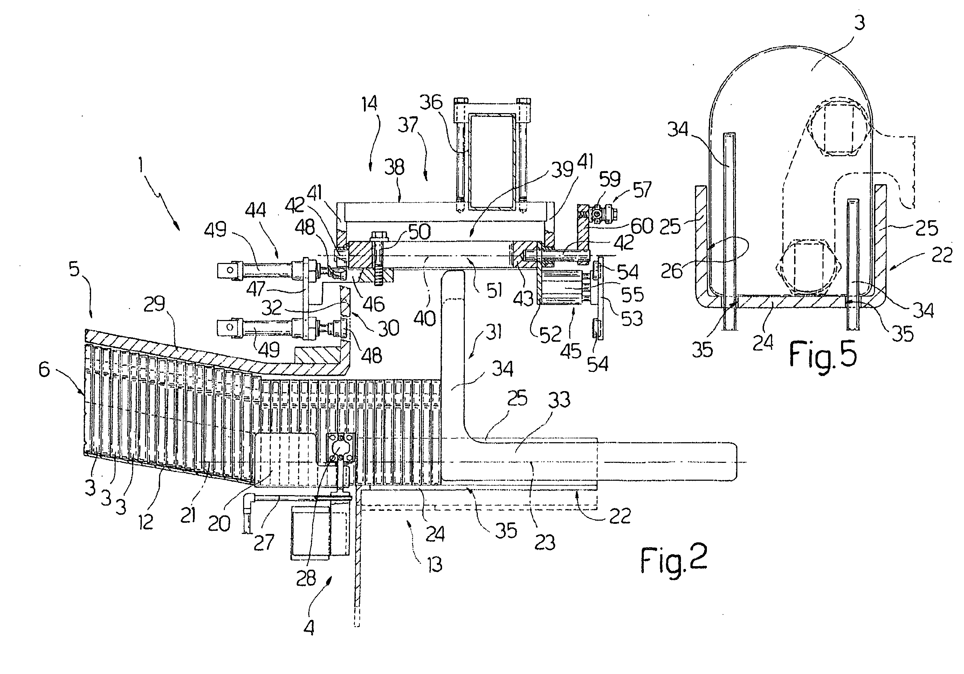

At the output of line-up station 11, feed station 5 comprises N number of vibrating chutes 12 (Figure 2), each for feeding a respective line 6 of upright rusks 3 to group-forming station 4, which, as shown in Figure 2, comprises a grouping device 13 for forming rusks 3 into groups 2, and a transfer device 14 located over grouping device 13 to remove groups 2 from grouping device 13 and feed groups 2 to output station 7.

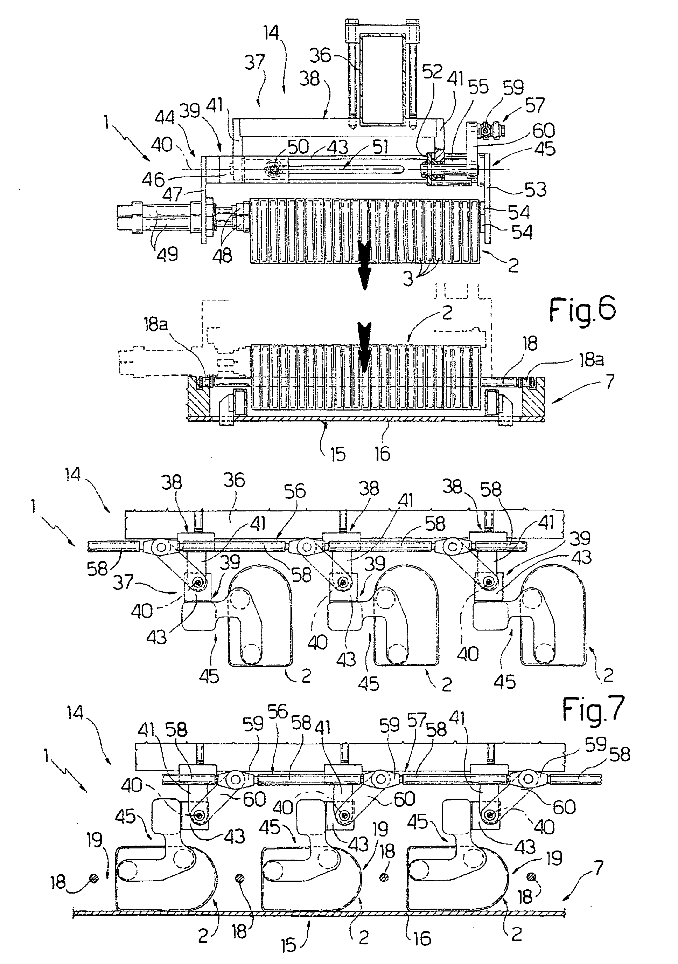

With reference to Figures 1 and 6, output station 7 comprises a conveyor 15, in turn comprising a fixed surface 16 extending in an output direction 17 perpendicular to feed direction 9; and a number of bars 18, which are parallel to each other and to feed direction 9, are equally spaced in output direction 17, and are moved transversely and continuously in output direction 17 by two drive chains 18a operated by an actuating device (not shown). Bars 18 thus define on surface 16 a succession of moving pockets 19, each for receiving a respective group 2 from transfer device 14 and feeding group 2 to the packaging unit (not shown).

As shown in Figures 2 to 4, for each of N lines 6, grouping device 13 comprises a fixed U-shaped pocket 20, which has a substantially horizontal, longitudinal axis 21 parallel to feed direction 9, defines a seat of substantially the same width as a rusk 3, and is positioned with its input end facing the output end of a respective chute 12 to receive the leading end of respective line 6 of rusks 3 moving down along chute 12.

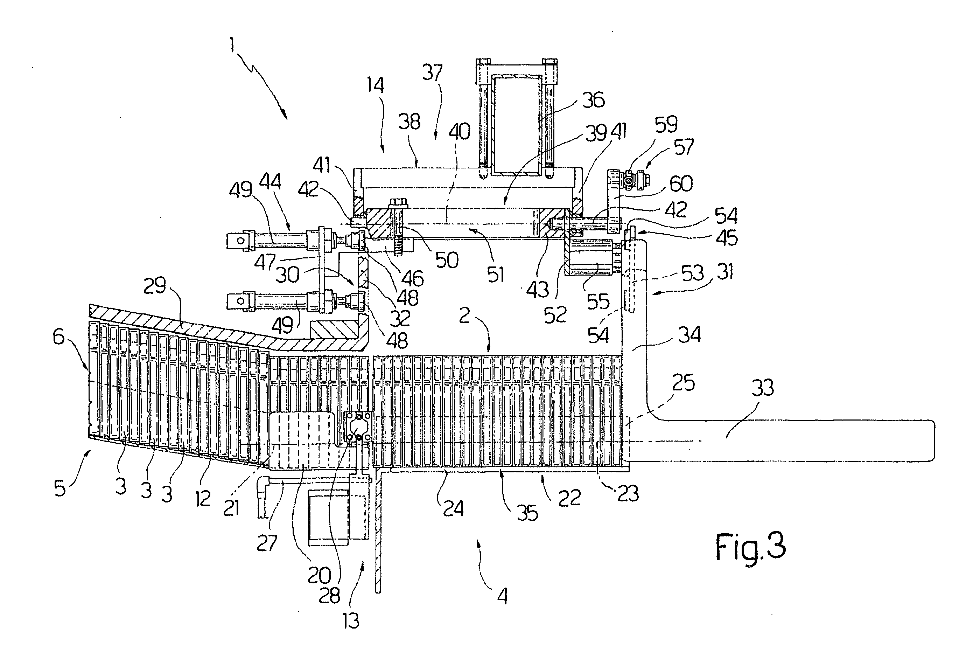

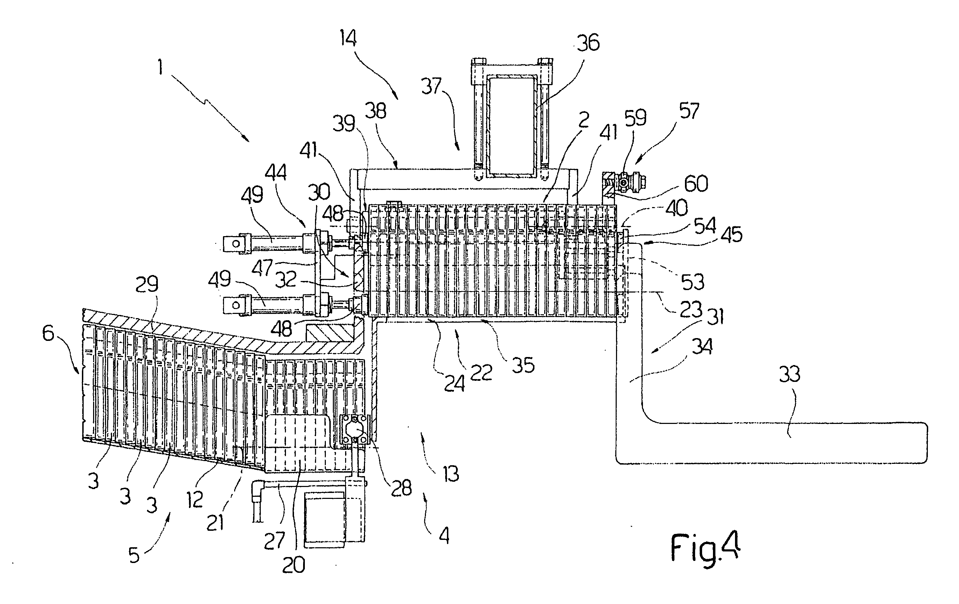

Facing the output end of each pocket 20, grouping device 13 comprises a respective movable pocket 22, which is also U-shaped, has a longitudinal axis 23 parallel to longitudinal axis 21, and is defined by a horizontal bottom wall 24, and by two vertical lateral walls 25 defining, with bottom wall 24, a seat 26 of the same width as fixed pocket 20. A known linear actuator (not shown) is connected to pocket 22 to move pocket 22, crosswise to longitudinal axis 23, between a loading position (Figures 2, 3), in which longitudinal axis 23 is coaxial with longitudinal axis 21 and pocket 22 receives the leading end of relative line 6 from pocket 20 to form a group 2 as described below, and an unloading position (Figure 4), in which pocket 22 is raised with respect to the loading position, and is connected to transfer device 14 to allow the transfer device to remove group 2 from pocket 22.

Each pocket 22 is also moved by the relative actuator (not shown) into an intermediate cleaning position (shown by the dash line in Figure 2), in which pocket 22 is lowered with respect to the loading position, and is positioned with its bottom wall 24 just below a compressed-air nozzle 27, which, before pocket 22 is moved back into the loading position to receive the next group 2, blows off any residue left inside pocket 22 by rusks 3 in the previous group 2 removed from pocket 22.

For each pocket 20, grouping device 13 comprises a respective stop member for arresting respective line 6 and defined by a gripper 28, which is located at the output end of pocket 20 facing pocket 22, and comprises two jaws located on opposite sides of pocket 20 and movable, to and from longitudinal axis 21, between a parted rest position, in which gripper 28 allows relative line 6 to pass from pocket 20 to pocket 22, and a closed grip position, in which gripper 28 grips the sides of the leading rusk 3 in line 6 to stop line 6 moving from pocket 20 to pocket 22.

As shown in Figures 3 and 4, for each line 6, grouping device 13 comprises a respective fixed rail 29 extending over the output end of relative chute 12 and over relative pocket 20 to retain and guide relative line 6; and two shoulders 30 and 31 for retaining the ends of group 2 inside relative pocket 22, and holding group 2 firmly together as pocket 22 is moved from the loading to the unloading position. Accordingly, shoulder 30 comprises two fixed members 32, which are integral with the end of rail 29 facing pocket 22, are parallel to each other and crosswise to longitudinal axis 21, and extend upwards from rail 29 towards transfer device 14.

Shoulder 31, on the other hand, comprises two L-shaped members, each of which comprises an arm 33 parallel to longitudinal axis 21 and on a level with pocket 20; and an arm 34 which is integral with the end of relative arm 33 facing pocket 22, and extends upwards, perpendicularly to arm 33, towards transfer device 14.

In addition to the function described above, shoulder 31 also serves to retain the front end of group 2 as group 2 is being formed and rusks 3 are fed along longitudinal axis 23 to fill pocket 22.

Accordingly, as shown in Figure 2, shoulder 31 is movable - parallel to longitudinal axis 21 and by a known actuator (not shown) - between a forward position, in which shoulder 31 is located close to the input end of pocket 22 in the loading position, and a withdrawn position, in which shoulder 31 is located close to the output end of pocket 22.

As shown in Figures 4 and 5, to allow shoulder 31 to move back and forth along pocket 22, and pocket 22 to move crosswise from the loading to the unloading position, bottom wall 24 of pocket 22 has two slots 35 parallel to each other and to longitudinal axis 23, and each of which is engaged in axially sliding manner by a respective arm 33, and in transversely sliding manner by a respective arm 34.

Finally, for reasons explained below, both members 32 of each shoulder 30, and arms 34 of each shoulder 31 are of different lengths. More specifically, the member 32 located to the rear with respect to the Figure 2-4 plane is shorter in length than the other member 32; and the arm 34 (Figure 5) located to the rear with respect to the Figure 2-4 plane is shorter in length than the other arm 34.

As shown in Figures 2 and 7, transfer device 14 comprises a rectangular-section metal beam 36 extending crosswise to longitudinal axes 21 and 23 and parallel to output direction 17, and connected to an actuator (not shown) for moving beam 36 crosswise to itself both vertically and horizontally, as described in detail below.

Beam 36 is fitted with N number of pickup heads 37, which form part of transfer device 14, are connected integrally to beam 36, and are moved by beam 36 between a pickup position - in which each pickup head 37 is located over a relative pocket 22 (Figures 2 to 4) to remove a respective group 2 from pocket 22 in the unloading position (Figure 4) - and a release position (Figures 6 and 7) - in which each pickup head 37 is located over conveyor 15 to release a respective group 2 into a respective pocket 19 on conveyor 15.

As shown in Figures 3, 6 and 7, each pickup head 37 comprises an inverted-U-shaped frame 38 connected rigidly to beam 36; and a gripper 39 for gripping a group 2 housed in relative pocket 22 in the unloading position, and which is fitted to frame 38 to rotate about an axis 40 parallel to longitudinal axes 21 and 23, to rotate the removed group 2 ninety degrees about axis 40.

More specifically, frame 38 comprises a bar fixed rigidly to beam 36; and two appendixes 41 extending downwards from the bar towards relative pocket 22, and each of which has a hole coaxial with axis 40 and engaged in freely rotating manner by a pin 42 projecting axially from a respective free end of a cross member 43 interposed between appendixes 41 and having a substantially square-section central portion.

Cross member 43 is fitted on the ends with two air-powered jaws 44 and 45, which project axially and downwards from cross member 43, are positioned facing each other, and are movable between a parted rest position (Figures 2 and 3) and a closed grip position (Figures 4 and 6).

More specifically, jaw 44 is located over rail 29 and comprises a support 46 connected to cross member 43; and an L-shaped bracket 47 connected rigidly to the free end of support 46, and fitted with two pressure members 48 movable by respective pneumatic pistons 49 in a direction parallel to axis 40.

As shown in Figure 3, the position of support 46, and therefore of pressure members 48, is adjustable axially with respect to cross member 43. For which purpose, support 46 is connected to cross member 43 by a screw 50, which is normally tightened through a slot 51 parallel to axis 40 and, when loosened, can be slid along slot 51 to adjust the axial position of support 46.

With reference to Figures 3 and 6, jaw 45 comprises a support 52 connected rigidly to cross member 43; and an L-shaped bracket 53, which is connected rigidly to the free end of support 52, is similar to and faces bracket 47, and supports two pressure members 54 movable by a pneumatic piston 55 in a direction parallel to axis 40, and each facing a corresponding pressure member 48 of bracket 47.

Transfer device 14 also comprises an actuator 56 for rotating cross member 43 of each gripper 39 about axis 40.

As shown in Figures 6 and 7, actuator 56 comprises a motor (not shown); and an articulated transmission 57 located alongside pickup heads 37, close to relative jaws 45, and comprising, for each pickup head 37, a connecting rod 58 crosswise to axis 40 and connected to the adjacent connecting rod 58 by a respective joint 59; and a crank 60 extending crosswise to axis 40, between joint 59 and one end of pin 42 integral with cross member 43.

The N number of group-forming stations 4 being identical and operating in parallel, operation of unit 1 will now be described with reference to the formation of one group 2, and as of the Figure 2 operating configuration, in which rusks 3 in a relative line 6 are moving through relative pocket 20 and relative gripper 28, in the parted position, into relative pocket 22 in the loading position.

When the leading rusk 3 comes to rest on shoulder 31 in the forward position, shoulder 31 is moved towards the withdrawn position to ease rusks 3 inside pocket 22. When a given Z number of rusks 3 is inserted inside pocket 22, shoulder 31 is stopped, and gripper 28 grips the sides of the rusk 3 at the output of pocket 20 to stop the forward movement of line 6.

As shown in Figure 3, once group 2 is formed, shoulder 31 is withdrawn one more step, just enough to detach the rusk 3 at the rear end of group 2 from the rusk 3 at the front end of pocket 20.

At this point, as shown in Figure 4, pocket 22 is moved into the unloading position, in which group 2 is gripped between jaws 44 and 45 of relative gripper 39 by operating relative pressure members 48 and 54.

As shown in Figure 5, when pocket 22 reaches the unloading position, group 2 is positioned with the end rusks 3 facing respective brackets 47 and 53, which can be positioned between the two members 32 of shoulder 30 and the two arms 34 of shoulder 31 respectively, by virtue of the different lengths of the two members 32 and of the two arms 34.

Once group 2 is gripped, beam 36 is raised in an extraction direction crosswise to longitudinal axis 23, is moved crosswise in a direction crosswise to longitudinal axis 23 and parallel to feed direction 9, and is finally lowered (Figure 6) in a direction parallel to the extraction direction, to move each pickup head 37 into the release position directly over conveyor 15; and pressure members 48 and 54 of grippers 39 are operated simultaneously to release respective groups 2 into respective pockets 19 on conveyor 15.

As shown in Figures 1 and 7, as pickup heads 37 are moved from the pickup position to the release position, actuator 56 is operated to rotate relative cross members 43, by means of articulated transmission 57, ninety degrees about axis 40, so groups 2 are released precisely and gently on conveyor 15, with rusks 3 resting on one side.

Once groups 2 are released, beam 36 is operated once more to move pickup heads 37 back into the pickup position.

It is important to note that, since conveyor 15 moves continuously, operation of beam 36 and grippers 39 is synchronized with conveyor 15 so that, in the interval in which pickup heads 37 are moved from the release position to the pickup position and vice versa, conveyor 15 advances far enough to align N number of empty pockets 19 with N number of unloading positions.

Finally, it should be pointed out that, if groups 2 are to be fed to the packaging unit (not shown) with the same orientation with which they are removed from respective pockets 22, groups 2 can be transferred from respective pockets 22 to conveyor 15 without rotating grippers 39, and therefore groups 2, about axis 40.

## Claims

1. A method of forming groups (2) of rusks (3) or similar products, the method comprising the steps of feeding a given number of lines (6) of rusks (3) in a feed direction (9) to respective pockets (22), each line (6) comprising a succession of rusks (3) positioned in a first orientation and packed together in a compact configuration in the feed direction (9); arresting each line (6) when a given number of rusks (3) has been fed into the relative pocket (22) to form a respective group (2) inside the pocket (22); extracting each group (2) from the respective pocket (22) by means of a respective gripper (39); moving each gripper (39) to an output station (7); and releasing each group (2) onto an output conveyor (15) by opening the respective gripper (39),
wherein the group (2) is extracted from the respective pocket (22) in an extraction direction crosswise to the feed direction (9), and
wherein the step of feeding the rusks (3) into the pocket (22) is performed with the pocket (22) in a loading position, and the step of extracting the group (2) from the pocket (22) is performed with the pocket (22) in an unloading position, and with the gripper (39) in a pickup position; the method comprising the further step of moving the pocket (22) from the loading position to the unloading position in a direction parallel to the extraction direction.

2. A method as claimed in Claim 1, and comprising the further step, prior to releasing the groups (2) onto the output conveyor (15), of imparting a given rotation to the relative grippers (39) to position the relative groups (2) in a second orientation different from the first orientation.

3. A method as claimed in Claim 2, wherein the rotation is performed about an axis (40) parallel to the feed direction (9).

4. A method as claimed in Claim 1, wherein, when the pocket (22) is in the unloading position, the group (2) is positioned between two jaws (44, 45) of the gripper (39) in a parted position; the method comprising the further step of closing the jaws (44, 45) onto the ends of the group (2).

5. A method as claimed in Claim 4, wherein the step of closing the jaws (44, 45) is performed by controlling air-powered pressure members (48, 54) associated with the jaws (44, 45).

6. A method as claimed in one of Claims 4 to 5, wherein the step of releasing the group (2) onto the output conveyor (15) is performed after moving the gripper (39) into a release position directly over the output conveyor (15); and wherein the gripper (39) is moved from the pickup position to the release position by performing an upward movement of the gripper (39) in the extraction direction, a crosswise movement of the gripper in a direction crosswise to the extraction direction, and a downward movement of the gripper in a direction parallel to the extraction direction and towards the output conveyor (15).

7. A method as claimed in Claims 2 and 6, wherein the step of rotating the grippers (39) is performed during said crosswise movement.

8. A unit for forming groups (2) of rusks (3) or similar baked products, the unit (1) comprising a given number (N) of pockets (22), each having a longitudinal axis (23) and for containing a given number (Z) of rusks (3); feed means (5) for supplying each pocket (22) with a respective line (6) of rusks (3) in a feed direction (9) parallel to said longitudinal axis (23), each line (6) comprising a succession of rusks (3) positioned in a first orientation and packed together in a compact configuration in the feed direction (9); stop means (28) for arresting each line (6) when said given number (Z) of rusks (3) has been fed into the relative pocket (22) to form a respective group (2) inside the pocket (22); an output conveyor (15); and transfer means (14) for extracting each group (2) from the respective pocket (22); the transfer means (14) comprising, for each pocket (22), a gripper (39) movable between a pickup position to remove a group (2) from the relative pocket (22), and a release position to release the group (2) onto the output conveyor (15),
wherein each gripper (39) is movable in an extraction direction crosswise to said longitudinal axis (23) to extract the relative group (2) from the relative pocket (22),
wherein each pocket (22) is mounted to move, in a direction which is crosswise to the relative longitudinal axis (23) and parallel to the extraction direction, between a loading position to receive the relative rusks (3), and an unloading position at which the relative gripper (39) is in the respective pickup position.

9. A unit as claimed in Claim 8, wherein each gripper (39) rotates about an axis (40) parallel to the feed direction (9); actuating means (56) being connected to each gripper (39) to impart a given rotation to the gripper to position the relative group (2) in a second orientation different from the first orientation.

10. A unit as claimed in Claim 9, wherein said actuating means (56) comprise, for each gripper (39), a crank (60) integral with the gripper (39); and a powered connecting rod (58) connected to the crank (60).

11. A unit as claimed in Claim 10, wherein the connecting rods (58) are connected to one another.

12. A unit as claimed in one of the Claims from 9 to 11, wherein said given rotation is of substantially 90°.

13. A unit as claimed in one of Claims 8 to 12, wherein each gripper (39) comprises two jaws (44, 45) movable, parallel to said longitudinal axis (23), to and from a grip position gripping a relative group (2).

14. A unit as claimed in Claim 13, wherein each jaw (44; 45) comprises respective air-powered pressure members (48; 54).

15. A unit as claimed in one of Claims 8 to 14, wherein the transfer means (14) comprise a beam (36) crosswise to said longitudinal axes (23) and supporting the grippers (39); the beam (36) being movable along a given path to move the grippers (39) between the pickup position and the release position.

16. A unit as claimed in Claim 15, wherein said path is U-shaped.

## Patentansprüche

1. Verfahren zum Ausbilden von Gruppen (2) von Zwiebäcken (3) oder ähnlichen Produkten, wobei das Verfahren folgende Schritte umfasst: Zuführen einer gegebenen Anzahl von Reihen (6) aus Zwiebäcken (3) in einer Zuführrichtung (9) zu jeweiligen Taschen (22), wobei jede Reihe (6) eine Abfolge von Zwiebäcken (3) enthält, die in einer ersten Ausrichtung angeordnet sind und in einer kompakten Anordnung in der Zuführrichtung (9) verpackt werden; Anhalten jeder Reihe (6), wenn eine gegebene Zahl von Zwiebäcken (3) in die jeweilige Tasche (22) zugeführt worden ist, um eine entsprechende Gruppe (2) innerhalb der Tasche (22) auszubilden; Extrahieren jeder Gruppe (2) aus der jeweiligen Tasche (22) mit Hilfe einer entsprechenden Greifeinrichtung (39); Bewegen jeder Greifeinrichtung (39) zu einer Ausgabestation (7); und Freigeben jeder Gruppe (2) auf eine Ausgabefördereinrichtung (15) durch Öffnen der entsprechenden Greifeinrichtung (39),
wobei die Gruppe (2) aus der jeweiligen Tasche (22) in einer Extrahierrichtung quer zu der Zuführrichtung (9) extrahiert wird und
der Schritt des Zuführens der Zwiebäcke (3) in die Tasche (22) mit der Tasche (22) in einer Befüllstellung ausgeführt wird und der Schritt des Extrahierens der Gruppe (2) aus der Tasche (22) mit der Tasche (22) in einer Entleerungsstellung ausgeführt wird, wobei sich die Greifeinrichtung (39) in einer Aufnahmestellung befindet; wobei das Verfahren weiterhin den Schritt des Bewegens der Tasche (22) von der Befüllstellung in die Entleerungsstellung in einer Richtung parallel zu der Extrahierrichtung umfasst.

2. Verfahren nach Anspruch 1, weiterhin umfassend den weiteren Schritt des Ausübens einer bestimmten Drehung auf die entsprechenden Greifeinrichtungen (39) vor dem Freigeben der Gruppen (2) auf die Ausgabefördereinrichtung (15), um die entsprechenden Gruppen (2) in einer zweiten Ausrichtung anzuordnen, die sich von der ersten Ausrichtung unterscheidet.

3. Verfahren nach Anspruch 2, bei dem die Drehung um eine Achse (40) parallel zu der Zuführrichtung (9) ausgeführt wird.

4. Verfahren nach Anspruch 1, bei dem, wenn sich die Tasche (22) in der Entleerungsstellung befindet, die Gruppe (2) zwischen zwei Klauen (44, 45) der Greifeinrichtung (39) in einer geöffneten Stellung angeordnet wird; wobei das Verfahren den weiteren Schritt des Schließens der Klauen (44, 45) an den Enden der Gruppe (2) umfasst.

5. Verfahren nach Anspruch 4, bei dem der Schritt des Schließens der Klauen (44, 45) durch Steuern luftbetriebener Druckelemente (48, 54) ausgeführt wird, die den Klauen (44, 45) zugeordnet sind.

6. Verfahren nach einem der Ansprüche 4 bis 5, bei dem der Schritt des Freigebens der Gruppe (2) auf die Ausgabefördereinrichtung (15) ausgeführt wird, nachdem die Greifeinrichtung (39) in eine Freigabestellung direkt über der Ausgabefördereinrichtung (15) bewegt wurde; und die Greifeinrichtung (39) von der Aufnahmestellung in die Freigabestellung durch Ausführen einer Aufwärtsbewegung der Greifeinrichtung (39) in der Extrahierrichtung, einer Querbewegung der Greifeinrichtung in einer Richtung quer zu der Extrahierrichtung und einer Abwärtsbewegung der Greifeinrichtung in einer Richtung parallel zu der Extrahierrichtung und hin zu der Ausgabefördereinrichtung (15) bewegt wird.

7. Verfahren nach Anspruch 2 und 6, bei dem der Schritt des Drehens der Greifeinrichtungen (39) während der Querbewegung ausgeführt wird.

8. Einheit zum Ausbilden von Gruppen (2) von Zwiebäcken (3) oder ähnlichen gebackenen Produkten, wobei die Einheit (1) umfasst: eine gegebene Zahl (N) von Taschen (22), die jeweils eine Längsachse (23) haben, und zum Aufnehmen einer gegebenen Zahl (Z) von Zwiebäcken (3); Zuführeinrichtungen (5), um jede Tasche (22) mit einer entsprechenden Reihe (6) von Zwiebäcken (3) in einer Zuführrichtung (9) parallel zu der Längsachse (23) zu versorgen, wobei jede Reihe (6) eine Abfolge von Zwiebäcken (3) enthält, die in einer ersten Ausrichtung angeordnet sind und in einer kompakten Anordnung in der Zuführrichtung (9) zusammengepackt werden; Stoppeinrichtungen (28) zum Anhalten jeder Reihe (6), wenn die gegebene Zahl (Z) von Zwiebäcken (3) in die entsprechende Tasche (22) zugeführt wurde, um eine entsprechende Gruppe (2) in der Tasche (22) auszubilden; eine Ausgabefördereinrichtung (15) und Übergabeeinrichtungen (14) zum Extrahieren jeder Gruppe (2) aus der jeweiligen Tasche (22); wobei die Übergabeeinrichtungen (14) für jede Tasche (22) eine Greifeinrichtung (39) enthalten, die zwischen einer Aufnahmestellung, um eine Gruppe (2) aus der jeweiligen Tasche (22) zu entnehmen, und einer Freigabestellung bewegt werden kann, um die Gruppe (2) auf die Ausgabefördereinrichtung (15) freizugeben,
wobei jede Greifeinrichtung (39) in einer Extrahierrichtung quer zu der Längsachse (23) bewegt werden kann, um die jeweilige Gruppe (2) aus der entsprechenden Tasche (22) zu extrahieren,
wobei jede Tasche (22) angebracht ist, um sich in einer Richtung, die quer zur der jeweiligen Längsachse (23) ist, und parallel zu der Extrahierrichtung zwischen einer Befüllstellung, um die jeweiligen Zwiebäcke (3) aufzunehmen, und einer Entleerungsstellung zu bewegen, in der sich die entsprechende Greifeinrichtung (39) in der jeweiligen Aufnahmestellung befindet.

9. Einheit nach Anspruch 8, bei der sich jede Greifeinrichtung (39) um eine Achse (40) parallel zu der Zuführrichtung (9) dreht; Betätigungseinrichtungen (56), die mit jeder Greifeinrichtung (39) verbunden sind, um eine bestimmte Drehung auf die Greifeinrichtung auszuüben, um die jeweilige Gruppe (2) in einer zweiten Ausrichtung anzuordnen, die sich von der ersten Ausrichtung unterscheidet.

10. Einheit nach Anspruch 9, bei der die Betätigungseinrichtungen (56) für jede Greifeinrichtung (39) eine Kurbel (60), die integraler Bestandteil der Greifeinrichtung (39) ist, und eine angetriebene Verbindungsstange (58) enthalten, die mit der Kurbel (60) verbunden ist.

11. Einheit nach Anspruch 10, bei der die Verbindungsstangen (58) miteinander verbunden sind.

12. Einheit nach einem der Ansprüche 9 bis 11, bei der die gegebene Drehung im wesentlichen 90° beträgt.

13. Einheit nach einem der Ansprüche 8 bis 12, bei der jede Greifeinrichtung (39) zwei Klauen (44, 45) enthält, die parallel zu der Längsachse (23) in eine und aus einer Greifstellung bewegt werden können, in der sie eine entsprechende Gruppe (2) greifen.

14. Einheit nach Anspruch 13, bei der jede Klaue (44, 45) jeweils luftbetriebene Druckelemente (48; 54) enthält.

15. Einheit nach einem der Ansprüche 8 bis 14, bei der die Überführungseinrichtungen (14) einen Träger (36) quer zu den Längsachsen (23) enthalten, der die Greifeinrichtungen (39) hält; wobei der Träger (36) entlang eines gegebenen Weges bewegt werden kann, um die Greifeinrichtungen (39) zwischen der Aufnahmestellung und der Freigabestellung zu bewegen.

16. Einheit nach Anspruch 15, bei der der Weg U-förmig ist.

## Revendications

1. Procédé pour former des groupes (2) de biscottes (3) ou de produits similaires, le procédé comprenant les étapes consistant in alimenter un nombre donné de lignes (6) de biscottes (3) dans une direction d'alimentation (9) vers des poche respective (22), chaque ligne (6) comprenant une succession de biscottes (3) positionnées dans une première orientation et groupées ensemble dans une configuration compacte dans la direction d'alimentation (9) ; arrêter chaque ligne (6) quand un nombre donné de biscottes (3) a été alimenté dans la poche relative pour former un groupe respectif (2) à l'intérieur de la poche (22) ; extraire chaque groupe (2) hors de la poche respective (22) au moyen d'un organe de préhension respectif (39) ; déplacer chaque organe de préhension (39) à une station de sortie (7) ; et relâcher chaque groupe (2) sur un convoyer de sortie (15) en ouvrant l'organe de préhension respectif (39),
dans lequel le groupe (2) est extrait hors de la poche respective (22) dans la direction d'extraction de manière croisée par rapport à la direction d'alimentation (9), et
dans lequel l'étape d'alimentation des biscottes (3) dans la poche (22) est exécutée avec la poche (22) dans position de chargement, et l'étape d'extraction du groupe (2) hors de la poche (22) est exécutée avec la poche (22) dans une position de déchargement, et avec l'organe de préhension (39) dans une position de prise ; le procédé comprenant l'étape supplémentaire consistant in déplacer la poche <221 de la position de chargement à la position de déchargement une direction parallèle à la direction d'extraction.

2. Procédé selon la revendication 1, comprenant l'étape supplémentaire, avant de relâcher les groupes (2) sur le convoyeur de sortie (15), consistant à imposer une rotation donnée aux organes de préhension relatifs (39) pour positionner les groupes relatifs dans une seconde orientation différente de la première orientation.

3. Procédé selon la revendication 2, dans lequel la rotation est exécutée autour d'un axe (40) parallèle si la direction d'alimentation (9).

4. Procédé selon la revendication 1, dans lequel, quand la poche (22) est dans la position de déchargement, le groupe (2) est positionné entre deux mâchoires (44, 45) de l'organe de préhension (39) dans une position séparée ; le procédé comprenant l'étape supplémentaire consistant à fermer les mâchoires (44, 45) sur les extrémités du groupe (2).

5. Procédé selon la revendication 4, dans lequel l'étape consistant à fermer les mâchoires (44, 45) est exécutée en commandant des éléments presseurs (48, 54) mus à l'air comprimé, associées avec les mâchoire (44, 45).

6. Procédé selon l'une des revendications 4 à 5, dans lequel l'étape de relâchement du groupe (2) sur le convoyeur de sortie (15) est exécutée après avoir déplacé l'organe de préhension (39) dans une position de relâchement directement au-dessus du convoyeur de sortie (15) ; et dans lequel l'organe de préhension (39) est déplacé de la position de prise à la position de relâchement en exécutant une mouvement montant de l'organe de préhension (39) dans la direction, d'extraction, un mouvement croisée de l'organe de préhension dans une direction croisée par rapport à la direction d'extraction, et un mouvement descendant de l'organe de préhension dans une direction parallèle à la direction d'extraction est vers le convoyer de sortie (15).

7. Procédé selon les revendications 2 et 6, dans lequel l'étape consistant à mettre en rotation les organes de (39) est exécutée pendant ledit mouvement croisé.

8. Unité pour former des groupes (2) de biscottes (3) ou de produits cuits similaires, l'unité (1) comprenant un nombre donné (N) de poches (22), chacune avant un axe longitudinal (23) et étant destinée à contenir un nombre donné (Z) de biscottes (3) ; des moyens d'alimentation (5) pour fournir à chaque poche (22) une ligne respective (6) de biscottes (3) dans une direction d'alimentation (9) parallèle audit axe longitudinal (23), chaque ligne (6) comprenant une succession de biscottes (3) positionnées (dans une première orientation et groupées ensemble dans une configuration compacte dans la direction d'alimentation (9) ; des moyens d'arrêt (28) pour arrêter chaque ligne (6) quand ledit nombre donné (Z) de biscottes (3) a été alimenté dans la poche relative (22) pour former un groupe respectif (2) à l'intérieur de la poche (22) ; un convoyeur de sorte (15); et des moyens de transfert (14) pour extraire chaque groupe (2) hors de la poche respective (22) ; les moyens de transfert (14) comprenant, pour chaque poche un organe de préhension (39) mobile entre une position de prise pour enlever un groupe (2) hors de la poche relative (22), et une position de relâchement pour relâcher le groupe (2) sur le convoyeur de sortie (15),
dans laquelle chaque organe de préhension (39) est mobile dans une direction d'extraction croisée par rapport audit axe longitudinal (23) pour extraire le groupe relatif (2) hors de la poche relative (22),
dans laquelle chaque poche (22) est montée pour se déplacer, dans une direction qui est croisée par rapport à l'axe longitudinal relatif (23) et parallèle à la direction d'extraction, entre une position de chargement pour recevoir les biscottes relatives (3), et une position de déchargement à laquelle l'organe de préhension relatif (39) est dans la position de prise respective.

9. Unité selon la revendication 8, dans laquelle chaque organe de préhension (39) tourne autour d'un axe (40) parallèle à la direction d'alimentation (9) ; des moyens d'actionnement (56) connectés à chaque de préhension (39) pour imposer une rotation donnée à l'organe de préhension afin de positionner le groupe relatif (2) dans une seconde orientation différente de la première orientation.

10. Unité selon la revendication 9, dans laquelle lesdits moyens d'actionnement (56) comprennent, pour chaque de préhension (39), une manivelle (60) intégrale avec l'organe de préhension (39) ; et une tige de connexion motorisée (58) connectée à la manivelle (60).

11. Unité selon la revendication 10, dans laquelle les tiges de connexion (58) sont connectées les unes aux autres.

12. Unité selon l'une des revendications 9 à 11, dans lequel ladite rotation donnée est sensiblement de 90°.

13. Unité selon l'une des revendications 8 à 12, dans laquelle chaque organe de préhension (39) comprend deux mâchoires (44, 45) mobiles, parallèlement audit axe longitudinal (23), vers et depuis une position de préhension pour la préhension d'un groupe relatif (2).

14. Unité selon la revendication 13, dans laquelle chaque mâchoire (44 ; 45) comprend des éléments presseurs respectifs (48 ; 54) mus à l'air.

15. Unité selon l'une des revendications 8 à 14, dans laquelle les moyens de transfert. (14) comprennent une poutre (36) croisée par rapport auxdits axes longitudinaux (23) et supportant les organes de préhension (39) ; la poutre (36) étant mobile le long d'un trajet donné pour déplacer les organes de préhension (39) entre la position de prise et la position de relâchement.

16. Unité selon la revendication 15, dans laquelle ledit trajet est en forme de U.
